# EUROPEAN PATENT SPECIFICATION

(11) **EP 2 377 358 B1**
(45) Date of publication and mention of the grant of the patent: **29.08.2018**
(21) Application number: 09793658.7
(22) Date of filing: 10.12.2009
(51) Int. Cl.: H04W 72/04

(54) **UPLINK SEMI-PERSISTENT SCHEDULING EXPLICIT RELEASE ACKNOWLEDGEMENT TRANSMISSION**
BESTÄTIGUNGSÜBERTRAGUNG EXPLIZITER FREIGABE MIT SEMIPERSISTENTEM AUFWÄRTSSTRECKEN-SCHEDULING
TRANSMISSION D'ACCUSÉ DE RÉCEPTION EXPLICITE DE LIBÉRATION DE PROGRAMMATION SEMI-PERSISTANTE DE LIAISON MONTANTE

(30) Priority: 12.12.2008 US 121979 P
(43) Date of publication of application: 19.10.2011
(73) Proprietor: BlackBerry Limited, Waterloo, ON N2K 0A7 (CA)
(72) Inventor: YU, Yi, Irving, Texas 75039 (US); CAI, Zhijun, Irving, Texas 75039 (US)
(74) Representative: Noble, Nicholas
(86) International application number: PCT/US2009/067520
(87) International publication number: WO 2010/068770

(56) References cited:
- NOKIA CORPORATION ET AL: "Missing details of semi-persistent scheduling for UL" 3GPP DRAFT; R2-085070, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Prague, Czech Republic; 20080922, 22 September 2008 (2008-09-22), XP050320014 [retrieved on 2008-09-22]
- SAMSUNG: "SPS resource release" 3GPP DRAFT; R2-084455 SPS RESOURCE RELEASE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20080812, 12 August 2008 (2008-08-12), XP050319508 [retrieved on 2008-08-12]
- NTT DOCOMO: "Views on UL ACK/NAK Repetition Details" 3GPP DRAFT; R1-082571 ACKNAK REPETITION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Warsaw, Poland; 20080625, 25 June 2008 (2008-06-25), XP050110831 [retrieved on 2008-06-25]
- ERICSSON: "Configuration of semi-persistent scheduling" 3GPP DRAFT; R2-080088 SEMI-PERSISTENT SCHEDULING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Sevilla, Spain; 20080108, 8 January 2008 (2008-01-08), XP050137981 [retrieved on 2008-01-08]
- DAJIE JIANG ET AL: "Principle and Performance of Semi-Persistent Scheduling for VoIP in LTE System" WIRELESS COMMUNICATIONS, NETWORKING AND MOBILE COMPUTING, 2007. WICOM 2007. INTERNATIONAL CONFERENCE ON, IEEE, PISCATAWAY, NJ, USA, 21 September 2007 (2007-09-21), pages 2861-2864, XP031261882 ISBN: 978-1-4244-1311-9

## Description

### BACKGROUND

As used herein, the terms "user equipment" and "UE" can refer to wireless devices such as mobile telephones, personal digital assistants, handheld or laptop computers, and similar devices that have telecommunications capabilities. Such a UE might consist of a wireless device and its associated Universal Integrated Circuit Card (UICC) that includes a Subscriber Identity Module (SIM) application, a Universal Subscriber Identity Module (USIM) application, or a Removable User Identity Module (R-UIM) application or might consist of the device itself without such a card. The term "UE" may also refer to devices that have similar wireless capabilities but that are not transportable, such as desktop computers, set-top boxes, or network nodes. When a UE is a network node, the network node could act on behalf of another function such as a wireless device and simulate or emulate the wireless device. For example, for some wireless devices, the IP (Internet Protocol) Multimedia Subsystem (IMS) Session Initiation Protocol (SIP) client that would typically reside on the device actually resides in the network and relays SIP message information to the device using optimized protocols. In other words, some functions that were traditionally carried out by a wireless device can be distributed in the form of a remote UE, where the remote UE represents the wireless device in the network. The term "UE" can also refer to any hardware or software component that can terminate a SIP session.

In traditional wireless telecommunications systems, transmission equipment in a base station transmits signals throughout a geographical region known as a cell. As technology has evolved, more advanced network access device has been introduced that can provide services that were not possible previously. This advanced network access device might include, for example, an enhanced node B (eNB) rather than a base station or other systems and devices that are more highly evolved than the equivalent equipment in a traditional wireless telecommunications system. Such advanced or next generation equipment may be referred to herein as long-term evolution (LTE) equipment, and a packet-based network that uses such equipment can be referred to as an evolved packet system (EPS). As used herein, the term "access device" will refer to any component, such as a traditional base station, an LTE eNB, or any other system device, which can provide a UE with access to other components in a telecommunications system.

For packet data, the signal that carries data between a UE and an access device can have a specific set of frequency, time, and coding parameters and other characteristics that might be specified by the access device. A connection between a UE and an access device that has a specific set of such characteristics can be referred to as a resource. An access device typically establishes a different resource for each UE with which it is communicating at any particular time.

3GPP TSG-RAN R2-085070 is directed to "[m]issing details of semi-persistent scheduling for UL". 3GPP TSG-RAN R2-084455 is directed to "SPS resource release". 3GPP TSG RAN R1-082571 is directed to "[v]iews on UL ACK/NAK Repetition Details". 3GPP TSG-RAN R2-080088 is directed to "[c]onfiguration of semi-persistent scheduling". Principle and Performance of Semi-Persistent Scheduling for VoIP in LTE System, ISBN 978-1-4244-1311-9, presents "an effective scheduling scheme called semi-persistent scheduling for VoIP service in LTE system".

### SUMMARY

An invention is set out in the claims.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.
Figure 1 is a diagram of an embodiment of a system according to an embodiment of the disclosure.
Figure 2 is a flowchart of a method for acknowledging a semi-persistent scheduling uplink resource release according to an embodiment of the disclosure.
Figure 3 illustrates a processor and related components suitable for implementing the several embodiments of the present disclosure.

### DETAILED DESCRIPTION

It should be understood at the outset that although illustrative implementations of one or more embodiments of the present disclosure are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents.

In a procedure known as semi-persistent scheduling (SPS), a resource for transmitting a data packet is granted and then used periodically for subsequent transmission of data packets. In SPS, an access device may allocate a resource for transmitting data packets to a UE at regular intervals on an uplink or downlink, based on a grant and/or a single scheduling request. During a voice session between a UE and an access device, talk spurts can alternate with silence periods. When a talk spurt ends and a silence period begins on the uplink, the UE typically stops transmitting in the uplink resource that the UE had been using. On the downlink, the UE typically stops receiving in the downlink resource that the UE has been assigned. When the UE stops transmitting in the uplink resource, the access device can release the resource and then grant it to another UE. The releasing of the resource on the uplink or downlink can be initiated by the UE or by the access device.

In current Radio Access Networks (RANs), the access device can signal the UE to release SPS resources using a downlink control information (DCI) format message over a physical downlink control channel (PDCCH). A DCI format 0 can be used to release an uplink SPS resource and a DCI format 1, 1A, or 2 can be used to release a downlink SPS resource. After receiving a signal for releasing a downlink resource, the UE can return a hybrid automatic repeat request acknowledgement (HARQ-ACK) to the access device confirming the release of the downlink resource. If no HARQ-ACK is received from the UE, the access device will retransmit the SPS release signaling until the HARQ-ACK is received from the UE or the maximum retransmission time has been reached. Therefore, returning a HARQ-ACK to confirm the downlink resource release prevents the UE from missing the detection of the SPS release signaling and attempting to receive the SPS downlink resource unnecessarily, which may waste valuable battery power.

However, in current systems, the UE does not return an acknowledgement (ACK) to the access device after receiving a signal for releasing an uplink resource. Consequently, the UE may continue transmitting data packets in the uplink using a non-allocated resource without the access device being aware, which can also waste battery power and cause additional signal interferences. In order for the access device to recognize an uplink resource release ACK from the UE, the uplink resource release ACK should be transmitted using a resource associated with the DCI format 0 or the uplink resource release signal over the PDCCH. However, no such resource is currently used or available. Hence, there is no means available for the UE to acknowledge receiving an SPS resource release on the uplink from the access device.

Disclosed herein is a system and method for acknowledging an SPS resource release signal on the uplink. The uplink resource release ACK may be transmitted using a resource associated with the uplink resource release signal. In one approach, the ACK may be associated with a DCI format 1A. The access device may use the DCI format 1A instead of the DCI format 0 over the PDCCH to signal an SPS uplink resource release. Specifically, one bit of the DCI format 1A may be set to indicate that the SPS resource release is for an uplink instead of a downlink. The UE may then transmit the ACK using an uplink control channel resource associated with the DCI format 1A of the PDCCH. In another approach, the ACK may be linked to the DCI format 0. When the UE receives the DCI format 0 over the PDCCH indicating an SPS uplink resource release, the UE may transmit the ACK using an uplink control channel resource associated with the PDCCH, for instance with the control channel element (CCE) index of the PDCCH. In yet a third approach, the ACK may be transmitted using the resources signaled by high layer signaling, for example, via the radio resource control (RRC) signaling. When the UE receives the SPS uplink resource release signal over the PDCCH, the UE may transmit the ACK using the resource signaled by radio resource control (RRC) signaling, for instance, which may be configured by the access device. The SPS uplink release ACK resource may be configured in the RRC message together with other SPS configuration parameters such as the periodicity in the RRCConnectionSetup message.

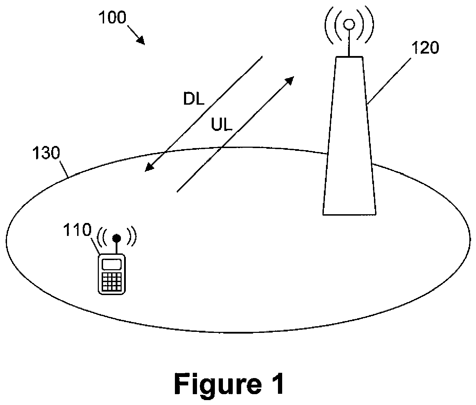

Figure 1 illustrates an embodiment of a wireless communication system 100, for instance as described in the Third Generation Partnership Project (3GPP). Figure 1 is exemplary and may have other components or arrangements in other embodiments. The wireless communication system 100 may comprise at least one UE 110 and an access device 120. The UE 110 may wirelessly communicate, via a wireless link, with the network access device 120. The wireless link may conform to any of a plurality of telecommunications standards or initiatives, such as those described in the 3GPP, including LTE, GSM, GPRS/EDGE, High Speed Packet Access (HSPA), and Universal Mobile Telecommunications System (UMTS). Additionally or alternatively, the wireless link may conform to any of a plurality of standards described in the 3GPP2, including Interim Standard 95 (IS-95), Code Division Multiple Access (CDMA) 2000 standards 1xRTT or 1xEV-DO. The wireless link may also be compatible with other standards, such as those described by the Institute of Electrical and Electronics Engineers (IEEE), or other industry forums, such as the WiMAX forum.

The access device 120 may be an ENB, a base station, or other components that promote network access for the UE 110. The access device 120 may communicate with any UE 110, which may be within the same cell 130, directly via a direct link. For instance, the direct link may be a point-to-point link established between the access device 120 and the UE 110 and used to transmit and receive signals between the two. Additionally, the access device 120 may also communicate with other components or devices to provide for the components of the wireless communication system 100 access to other networks.

The UE 110 and the access device 120 may wirelessly communicate via at least one downlink (DL) channel, at least one uplink (UL) channel, or both. The downlink and uplink channels may be physical channels, which may be statically, semi-statically, or dynamically allocated network resources. For instance, the downlink and uplink channels may comprise at least one physical downlink shared channel (PDSCH), at least one physical downlink control channel (PDCCH), at least one PUSCH, at least one PUCCH, or combinations thereof. In an embodiment, the downlink and uplink channels may be established using frequency-division duplexing (FDD), where signals are received and transmitted at different frequencies. Additionally or alternatively, the downlink and uplink channels may be established using time-division, where the signals may be transmitted, received, or both at different transmission time intervals (TTIs).

In an embodiment, the UE 110 may receive from the access device 120 an SPS resource release signal for an uplink over a PDCCH, for instance in the form of a DCI format 0 message or in other formats. The UE 110 may then acknowledge receiving the uplink resource release signal by transmitting an ACK to the access device 120 to indicate the release of the uplink resource. Hence, the SPS resource may be available again and the access device 120 may allocate the SPS resource to another UE. To enable the UE 110 to transmit the ACK to the access device 120, an uplink channel resource associated with the uplink resource release signal should be available. When the ACK is transmitted using such an uplink channel resource, the access device 120 may be able to associate the ACK with the uplink SPS resource release signaling. The SPS uplink resource release is thereby confirmed, and the access device 120 is aware that no further data will be received from the UE 110 using non-allocated resources, and hence the access device 120 may act accordingly.

In an embodiment, the UE 110 may receive from the access device 120 a DCI format 1A, instead of a DCI format 0, indicating an SPS resource release for an uplink. The DCI format 1A may comprise a reserved bit, which may be set to indicate the uplink resource release. Typically, the DCI format 1A may comprise a plurality of unused bits, of which one bit may be reserved. On the other hand, when the reserved bit is not set, the DCI format 1A may indicate an SPS resource release for a downlink. Upon determining that the DCI format 1A over the PDCCH indicates an SPS uplink resource release, the UE 110 may transmit the ACK to the access device 120 using an uplink channel resource that is associated with the DCI format 1A of the PDCCH.

In another embodiment, the UE 110 may receive, over the PDCCH, a DCI format 0 indicating an SPS resource release for an uplink. Since currently there is no uplink channel resource associated with the DCI format 0, the UE 110 may transmit an ACK which is linked to the DCI format 0 of the PDCCH. For instance, the UE 110 may be configured to transmit the ACK using an uplink channel resource associated with the CCE index of the PDCCH.

In an alternative embodiment, the UE 110 may receive an SPS resource release for an uplink over the PDCCH. The UE 110 may then transmit the ACK in response using the resources signaled by high layer signaling. For instance, the UE 110 may use the resource signaled by RRC signaling to transmit the ACK to the access device 120. The access device 120 may configure and allocate the uplink SPS release ACK resources for the UE 110 by high layer signaling. In an embodiment, the UE 110 may only use the allocated resources to transmit the ACK. The access device 120 may send to the UE 110 other SPS configuration information with the allocated resources over the RRC signaling.

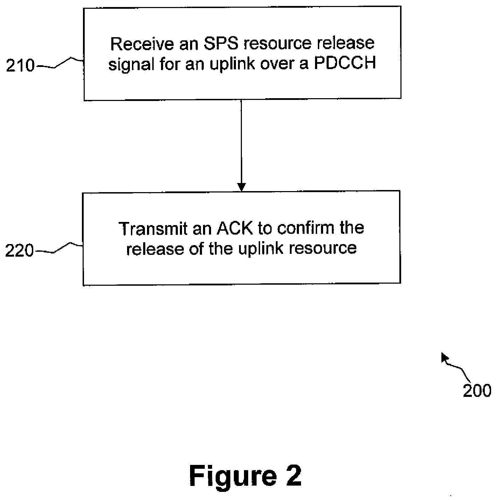

Figure 2 illustrates an embodiment of a method 200 for acknowledging an SPS uplink resource release in the wireless communication system 100. At block 210, the UE 110 may receive from the access device 120 the SPS uplink resource release signal over a PDCCH. For instance, the UE 110 may receive a DCI format 1A with a bit set to indicate an uplink resource release, a DCI format 0, or some other message format over the PDCCH. At block 220, the UE 110 may transmit an ACK to the access device 120 to confirm the release of the uplink resource. For instance, the UE 110 may transmit the ACK using an uplink channel resource associated with the DCI format 1A of the PDDCH or with the CCE index of the PDCCH. Alternatively, the UE 110 may transmit the ACK using the resource signaled by the high layer signaling such as RRC signaling, which may be allocated by the access device 120.

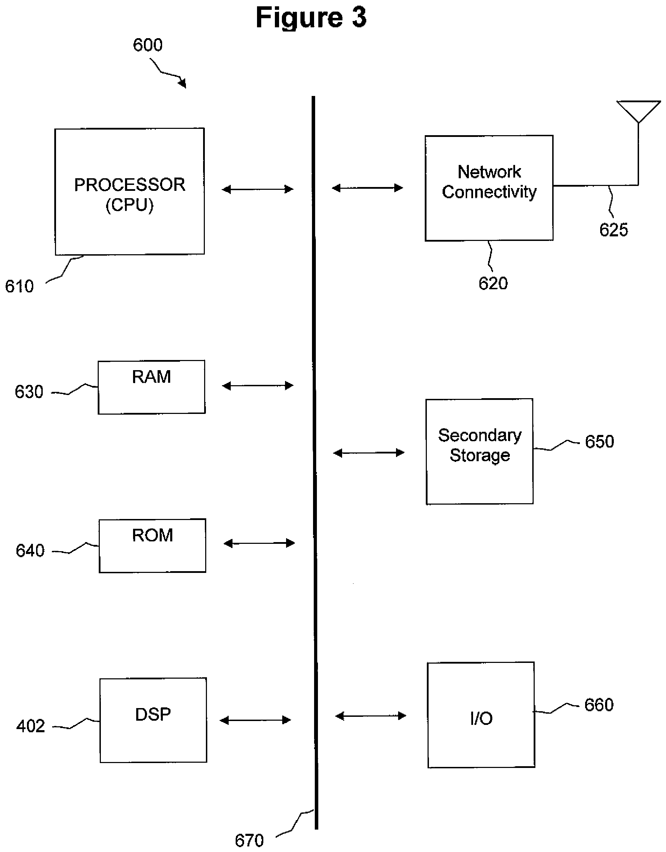

The UE 110 and other components described above might include a processing component that is capable of executing instructions related to the actions described above. Figure 3 illustrates an example of a system 600 that includes a processing component 610 suitable for implementing one or more embodiments disclosed herein. In addition to the processor 610 (which may be referred to as a central processor unit or CPU), the system 600 might include network connectivity devices 620, random access memory (RAM) 630, read only memory (ROM) 640, secondary storage 650, and input/output (I/O) devices 660. These components might communicate with one another via a bus 660. In some cases, some of these components may not be present or may be combined in various combinations with one another or with other components not shown. These components might be located in a single physical entity or in more than one physical entity. Any actions described herein as being taken by the processor 610 might be taken by the processor 610 alone or by the processor 610 in conjunction with one or more components shown or not shown in the drawing, such as a DSP 402. Although the DSP 402 is shown as a separate component, the DSP 402 might be incorporated into the processor 610.

The processor 610 executes instructions, codes, computer programs, or scripts that it might access from the network connectivity devices 620, RAM 630, ROM 640, or secondary storage 650 (which might include various disk-based systems such as hard disk, floppy disk, or optical disk). While only one CPU 610 is shown, multiple processors may be present. Thus, while instructions may be discussed as being executed by a processor, the instructions may be executed simultaneously, serially, or otherwise by one or multiple processors. The processor 610 may be implemented as one or more CPU chips.

The network connectivity devices 620 may take the form of modems, modem banks, Ethernet devices, universal serial bus (USB) interface devices, serial interfaces, token ring devices, fiber distributed data interface (FDDI) devices, wireless local area network (WLAN) devices, radio transceiver devices such as code division multiple access (CDMA) devices, global system for mobile communications (GSM) radio transceiver devices, worldwide interoperability for microwave access (WiMAX) devices, and/or other well-known devices for connecting to networks. These network connectivity devices 620 may enable the processor 610 to communicate with the Internet or one or more telecommunications networks or other networks from which the processor 610 might receive information or to which the processor 610 might output information. The network connectivity devices 620 might also include one or more transceiver components 625 capable of transmitting and/or receiving data wirelessly.

The RAM 630 might be used to store volatile data and perhaps to store instructions that are executed by the processor 610. The ROM 640 is a non-volatile memory device that typically has a smaller memory capacity than the memory capacity of the secondary storage 650. ROM 640 might be used to store instructions and perhaps data that are read during execution of the instructions. Access to both RAM 630 and ROM 640 is typically faster than to secondary storage 650. The secondary storage 650 is typically comprised of one or more disk drives or tape drives and might be used for non-volatile storage of data or as an over-flow data storage device if RAM 630 is not large enough to hold all working data. Secondary storage 650 may be used to store programs that are loaded into RAM 630 when such programs are selected for execution.

The I/O devices 660 may include liquid crystal displays (LCDs), touch screen displays, keyboards, keypads, switches, dials, mice, track balls, voice recognizers, card readers, paper tape readers, printers, video monitors, or other well-known input or output devices. Also, the transceiver 625 might be considered to be a component of the I/O devices 660 instead of or in addition to being a component of the network connectivity devices 620.

In an embodiment, a method is provided for acknowledging an SPS uplink resource release. The method comprising receiving an uplink SPS resource release signal over a PDCCH, and sending an ACK to confirm the reception of the uplink SPS resource release signal.

In another embodiment, a method is provided for acknowledging an SPS uplink resource release. The method comprising sending an uplink SPS resource release signal over a PDCCH, and receiving an ACK to confirm the reception of the uplink SPS resource release signal.

In another embodiment, a UE is provided. The UE comprising a processor configured to receive an uplink SPS resource release signal over a PDCCH, and transmit an ACK to confirm the reception of the uplink SPS resource release signal.

In another embodiment, an access device is provided. The access device comprising a processor configured to transmit an uplink SPS resource release signal over a PDCCH, and receive an ACK to confirm the reception of the uplink SPS resource release signal.

## Claims

1. A method for acknowledging a semi-persistent scheduling "SPS" uplink resource release, comprising:
receiving (210) an uplink SPS resource release signal over a physical downlink control channel "PDCCH", wherein the SPS resource release signal is indicated using a downlink control information "DCI" format 0 over the PDCCH; and
sending (220) an acknowledgement "ACK" to confirm the reception of the uplink SPS resource release signal, wherein the ACK is transmitted using a control channel element "CCE" index over which the DCI format 0 of the PDCCH was transmitted.

2. A method for acknowledging a semi-persistent scheduling "SPS" uplink resource release, comprising:
sending an uplink SPS resource release signal over a physical downlink control channel "PDCCH", wherein the SPS resource release signal is indicated using a downlink control information "DCI" format 0 over the PDCCH; and
receiving an acknowledgement "ACK" to confirm the reception of the uplink SPS resource release signal, wherein the ACK is received using a resource associated with a control channel element "CCE" index over which the DCI format 0 of the PDCCH was transmitted.

3. A user equipment "UE" (110) comprising:
a processor configured to receive (210) an uplink semi-persistent scheduling "SPS" resource release signal over a physical downlink control channel "PDCCH", wherein the SPS resource release signal is indicated using a downlink control information "DCI" format 0 over the PDCCH; and
transmit (220) an acknowledgement "ACK" to confirm the reception of the uplink SPS resource release signal, wherein the ACK is transmitted using a resource associated with a control channel element "CCE" index over which the DCI format 0 of the PDCCH was transmitted.

4. An access device (120) comprising:
a processor configured to transmit an uplink semi-persistent scheduling "SPS" resource release signal over a physical downlink control channel "PDCCH", wherein the SPS resource release signal is indicated using a downlink control information "DCI" format 0 over the PDCCH; and
receive an acknowledgement "ACK" to confirm the reception of the uplink SPS resource release signal, wherein the ACK is received using a resource associated with a control channel element "CCE" index over which the DCI format 0 of the PDCCH was transmitted.

5. A computer-readable medium containing instructions that, when executed by a processor, perform the steps of any of the above method claims 1 and 2.

## Patentansprüche

1. Verfahren zum Quittieren einer Freigabe eines semipersistenten Terminierungs- bzw. "SPS"-Aufwärtsstrecken-Betriebsmittels, umfassend:
Empfangen (210) eines Aufwärtsstrecken-SPS-Betriebsmittel-Freigabesignals über einen physikalischen Abwärtsstrecken-Steuerkanal "PDCCH", wobei das SPS-Betriebsmittel-Freigabesignal unter Verwendung eines Abwärtsstrecken-Steuerinformationen- bzw. "DCI"-Formats 0 über den PDCCH angegeben wird; und
Senden (220) einer Quittung "ACK" zum Bestätigen des Empfangs des Aufwärtsstrecken-SPS-Betriebsmittel-Freigabesignals, wobei die ACK unter Verwendung eines Steuerkanalelement- bzw. "CCE"-Indexes, über den das DCI-Format 0 des PDCCH übertragen wurde, übertragen wird.

2. Verfahren zum Quittieren einer Freigabe eines semipersistenten Terminierungs- bzw. "SPS"-Aufwärtsstrecken-Betriebsmittels, umfassend:
Senden eines Aufwärtsstrecken-SPS-Betriebsmittel-Freigabesignals über einen physikalischen Abwärtsstrecken-Steuerkanal "PDCCH", wobei das SPS-Betriebsmittel-Freigabesignal unter Verwendung eines Abwärtsstrecken-Steuerinformationen- bzw. "DCI"-Formats 0 über den PDCCH angegeben wird; und
Empfangen einer Quittung "ACK" zum Bestätigen des Empfangs des Aufwärtsstrecken-SPS-Betriebsmittel-Freigabesignals, wobei die ACK unter Verwendung eines mit einem Steuerkanalelement- bzw. "CCE"-Index, über den das DCI-Format 0 des PDCCH übertragen wurde, assoziierten Betriebsmittels empfangen wird.

3. Benutzerausrüstung "UE" (110), umfassend:
einen Prozessor, konfiguriert zum Empfangen (210) eines semipersistenten Terminierungs- bzw. "SPS"-Aufwärtsstrecken-Betriebsmittel-Freigabesignals über einen physikalischen Abwärtsstrecken-Steuerkanal "PDCCH", wobei das SPS-Betriebsmittel-Freigabesignal unter Verwendung eines Abwärtsstrecken-Steuerinformationen- bzw. "DCI"-Formats 0 über den PDCCH angegeben wird; und
Senden (220) einer Quittung "ACK" zum Bestätigen des Empfangs des Aufwärtsstrecken-SPS-Betriebsmittel-Freigabesignals, wobei die ACK unter Verwendung eines mit einem Steuerkanalelement- bzw. "CCE"-Index, über den das DCI-Format 0 des PDCCH übertragen wurde, assoziierten Betriebsmittels übertragen wird.

4. Zugangsvorrichtung (120), umfassend:
einen Prozessor, konfiguriert zum Übertragen eines semipersistenten Terminierungs- bzw. "SPS"-Aufwärtsstrecken-Betriebsmittel-Freigabesignals über einen physikalischen Abwärtsstrecken-Steuerkanal "PDCCH", wobei das SPS-Betriebsmittel-Freigabesignal unter Verwendung eines Abwärtsstrecken-Steuerinformationen- bzw. "DCI"-Formats 0 über den PDCCH angegeben wird; und
Empfangen einer Quittung "ACK" zum Bestätigen des Empfangs des Aufwärtsstrecken-SPS-Betriebsmittel-Freigabesignals, wobei die ACK unter Verwendung eines mit einem Steuerkanalelement- bzw. "CCE"-Index, über den das DCI-Format 0 des PDCCH übertragen wurde, assoziierten Betriebsmittels empfangen wird.

5. Computerlesbares Medium, das Anweisungen enthält, die, wenn sie durch einen Prozessor ausgeführt werden, die Schritte eines der vorstehenden Verfahrensansprüche 1 und 2 durchführen.

## Revendications

1. Procédé pour accuser réception d'une libération de ressource de liaison montante de planification semi-persistante « SPS », comprenant :
la réception (210) d'un signal de libération de ressource SPS de liaison montante sur un canal de contrôle de liaison descendante physique « PDCCH », où le signal de libération de ressource SPS est indiqué en utilisant un format d'information de contrôle de liaison descendante « DCI » 0 sur le PDCCH ; et
l'envoi (220) d'un accusé de réception « ACK » pour confirmer la réception du signal de libération de ressource SPS de liaison montante, où l'ACK est transmis en utilisant un indice d'élément de canal de contrôle « CCE » sur lequel le format DCI 0 du PDCCH a été transmis.

2. Procédé pour accuser réception d'une libération de ressource de liaison montante de planification semi-persistante « SPS », comprenant :
l'envoi d'un signal de libération de ressource SPS de liaison montante sur un canal de contrôle de liaison descendante physique « PDCCH », où le signal de libération de ressource SPS est indiqué en utilisant un format d'information de contrôle de liaison descendante « DCI » 0 sur le PDCCH ; et
la réception d'un accusé de réception «ACK» pour confirmer la réception du signal de libération de ressource SPS de liaison montante, où l'ACK est reçu en utilisant une ressource associée à un indice d'élément de canal de contrôle « CCE » sur lequel le format DCI 0 du PDCCH a été transmis.

3. Equipement utilisateur « UE » (110) comprenant :
un processeur configuré pour recevoir (210) un signal de libération de ressource de planification semi-persistante « SPS » de liaison montante sur un canal de contrôle de liaison descendante physique « PDCCH », où le signal de libération de ressource SPS est indiqué en utilisant un format d'information de contrôle de liaison descendante « DCI » 0 sur le PDCCH ; et
transmettre (220) un accusé de réception « ACK » pour confirmer la réception du signal de libération de ressource SPS de liaison montante, où l'ACK est transmis en utilisant une ressource associée à un indice d'élément de canal de contrôle « CCE » sur lequel le format DCI 0 du PDCCH a été transmis.

4. Dispositif d'accès (120) comprenant :
un processeur configuré pour transmettre un signal de libération de ressource de planification semi-persistante « SPS » de liaison montante sur un canal de contrôle de liaison descendante physique « PDCCH », où le signal de libération de ressource SPS est indiqué en utilisant un format d'information de contrôle de liaison descendante « DCI » 0 sur le PDCCH ; et
recevoir un accusé de réception « ACK » pour confirmer la réception du signal de libération de ressource SPS de liaison montante, où l'ACK est reçu en utilisant une ressource associée à un indice d'élément de canal de contrôle « CCE » sur lequel le format DCI 0 du PDCCH a été transmis.

5. Support lisible par ordinateur contenant des instructions qui, lorsqu'elles sont exécutées par un processeur, effectuent les étapes de l'une quelconque des revendications 1 et 2 du procédé ci-dessus.
